# EUROPEAN PATENT SPECIFICATION

(11) **EP 3 128 411 B1**
(45) Date of publication and mention of the grant of the patent: **28.10.2020**
(21) Application number: 16162410.1
(22) Date of filing: 24.03.2016
(51) Int. Cl.: G06F 3/0488, G06F 3/0485

(54) **INTERFACE DISPLAY METHOD, TERMINAL, COMPUTER PROGRAM AND RECORDING MEDIUM**
SCHNITTSTELLENANZEIGEVERFAHREN, ENDGERÄT, COMPUTERPROGRAMM UND ENTSPRECHENDER DATENTRÄGER
PROCÉDÉ D'AFFICHAGE D'INTERFACE, TERMINAL, PROGRAMME D'ORDINATEUR ET SUPPORT D'ENREGISTREMENT

(30) Priority: 03.08.2015 CN 201510469034
(43) Date of publication of application: 08.02.2017
(73) Proprietor: Xiaomi Inc., Beijing 100085 (CN)
(72) Inventor: ZHU, Ruixian, 100085 BEIJING (CN); WANG, Guangjian, 100085 BEIJING (CN); PAN, Long, 100085 BEIJING (CN)
(74) Representative: Cabinet Beau de Loménie

(56) References cited:
- WO-A1-99/34306
- WO-A1-2010/101917
- US-A1- 2010 005 053

## Description

### TECHNICAL FIELD

The present disclosure generally relates to the field of network communication, and more particularly, to an interface display method and device.

### BACKGROUND

With continuous development of the network communication technology, a user may browse massive information via a terminal, for example, list information. When a user is browsing a piece of list information, the user may desire to return to a previous piece of interested information which has already been read, and interface display may be required. A list page should generally have a navigation bar, while each tag in the navigation bar may not enable rapid navigation according to a requirement of a user. When the user requires interface display, the user may have to operate a terminal to return to each piece of list information which has been read for searching one by one. Therefore, an efficiency of interface display provided by a terminal is generally very low, which leads to a poor user experience.

Document WO9934306A1 concerns managing navigation and history information in a computer application or utility.

Document WO2010101917A1 provides a method for storing at least a portion of the history of one or more applications, so that the history can be accessed at a later point in time.

Document US2010005053A1 proposes a method for enabling discrete back/forward actions within a dynamic web application.

### SUMMARY

The invention is defined in the appended claims.

The present disclosure provides an interface display method and device, for solving the problem of low efficiency of interface display provided by a terminal, which may lead to a poor user experience.

According to a first aspect the present invention, a method of displaying an interface on a terminal is defined according to claim 1.

The invention is also directed to a computer program for executing the steps of an interface display method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect of the present invention, a terminal is defined according to claim 3. The dependent claims define further advantageous embodiments.

It should be appreciated that the above general description and detailed description below are only exemplary and explanatory and not intended to limit the present invention, which is defined by the appended claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of an interface display method, according to an exemplary embodiment of the present disclosure.
Fig. 2 is a flow chart of another interface display method, according to an exemplary embodiment of the present disclosure.
Fig. 3 is a flow chart of another interface display method, according to an exemplary embodiment of the present disclosure.
Fig. 4 is a flow chart of another interface display method, according to an exemplary embodiment of the present disclosure.
Fig. 5 is a flow chart of another interface display method, according to an exemplary embodiment of the present disclosure.
Fig. 6 is a flow chart of another interface display method, according to an exemplary embodiment of the present disclosure.
Fig. 7 is a diagram of an application scenario of an interface display method, according to an exemplary embodiment of the present disclosure.
Fig. 8 is a block diagram of an interface display device, according to an exemplary embodiment of the present disclosure.
Fig. 9 is a block diagram of another interface display device, according to an exemplary embodiment of the present disclosure.
Fig. 10 is a block diagram of another interface display device, according to an exemplary embodiment of the present disclosure.
Fig. 11 is a block diagram of another interface display device, according to an exemplary embodiment of the present disclosure.
Fig. 12 is a block diagram of another interface display device, according to an exemplary embodiment of the present disclosure.
Fig. 13 is a block diagram of another interface display device, according to an exemplary embodiment of the present disclosure.
Fig. 14 is a structure diagram of an interface display device, according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Terms used in the present disclosure are only adopted to describe specific embodiments and not intended limit the present disclosure. "One" "said" and "the" representative of a singular form in the present disclosure and the attached claims are also adopted to indicate most forms unless the context clearly illustrates other meanings. It should also be understood that term "and/or" used in the present disclosure refers to any or all possible combinations including one or more associated listed items.

It should be understood that various information may be described with terms first, second, third and the like in the present disclosure, but these information should not be limited to these terms. These terms are only adopted to distinguish information of the same type. For example, without departing from the scope of the present disclosure, first information may also be called second information. Similarly, second information may also be called first information. Depending on the context, the word "if" used here may be explained as "while" or "when" or "responding to a determ ination."

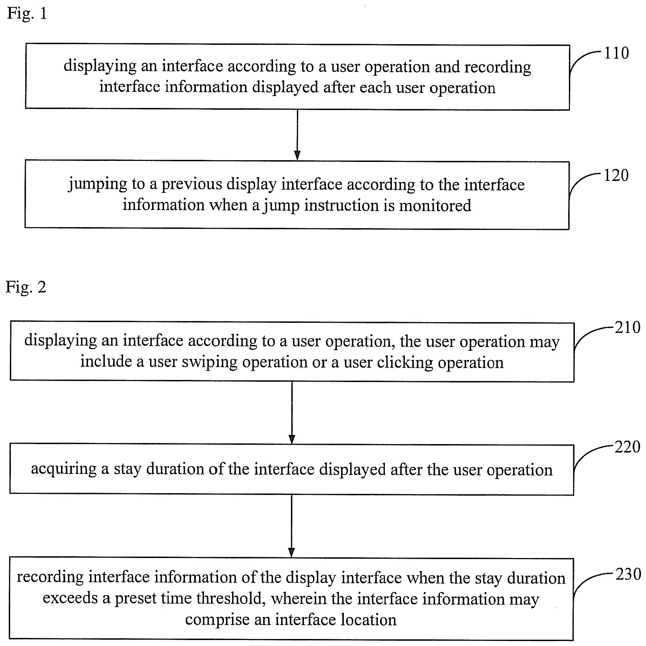

As shown in Fig. 1, Fig. 1 is a flow chart of an interface display method, according to an exemplary embodiment of the present disclosure. The method may be applied in a terminal, wherein the terminal may be any one among a smart phone, a table computer, a Personal Computer and the like.

The method includes the following steps:
Step 110: displaying an interface according to a user operation, and recording interface information displayed in response to (or after) each user operation.

In a particular example, the interface is a page of a website, said web page containing interface information such as text, images or links for instance.

In a particular example, a user may scroll up and/or down in a web page to access interface information contained therein, wherein by scrolling up and/or down the user accesses various display interfaces each containing corresponding interface information.

According to a particular example, a terminal may provide massive browsable information for a user, for example, contact lists, short messages or news. When the user browses the information, the terminal may display the interface according to the user operation, and record the interface information displayed after each user operation, so as to meet a requirement of the user on returning to a display interface which has already been browsed. The user operation may be a user swiping operation or a user clicking operation.

For example, when the user browses a piece of list information via the terminal, the terminal may record each interface location within the list that the user accesses (or wherein the user "stays"), and when the user desires to jump to the previous interface location within the list, the terminal may rapidly perform locating and jumping to the previous interface location within the list.

In a particular example, an interface location corresponds to a location in a display interface, said position corresponding to the position of a scroll bar. It is thus easier for the user to go back to the previous page or interface that he/she is interested in, thereby obviating the need for the user to review the page from the top to the bottom.

Step 120: when a jump instruction is detected, jumping to a previous display interface according to the recorded interface information displayed in response to each user operation.

According to the present disclosure, the terminal may store interface information to be recorded in a data stack. When the jump instruction is detected (or monitored), the terminal may extract the interface information, for example, an interface location, of the previous display interface from the data stack and jump to the previous display interface according to the interface location.

According to the embodiment, the terminal displays the interface according to the user operation, records the interface information displayed after (or in response to) each user operation, and jumps to the previous display interface according to the recorded interface information displayed in response to (or after) each user operation when the jump instruction is detected, so that the terminal may rapidly jump to the previous display interface according to a requirement of the user, which may lead to simple and convenient operations, as well as improved user experience.

As shown in Fig. 2, Fig. 2 is a flow chart of another interface display method, according to an exemplary embodiment of the present disclosure. The method may be applicable to a terminal, and when Step 110 of displaying an interface according to a user operation and recording interface information displayed after each user operation is executed, the method may include the following steps:
Step 210: displaying the interface according to the user operation, wherein the user operation may include a user swiping operation or a user clicking operation.

According to the present disclosure, after detecting the user operation, the terminal may display the interface according to the user operation.

For example, when the user browses a contact list via the terminal, the user may browse the contact list by virtue of swiping operations.

For another example, when the user browses a news list via the terminal, the user may browse detailed information of a piece of news by virtue of clicking operations.

Step 220: acquiring a stay duration of the interface displayed after the user operation. In the present disclosure, it is meant by "stay duration" the duration of the display of a given interface.

According to the present disclosure, when the terminal displays an interface according to a user operation, the stay duration of said interface may be longer if the user is interested in the content of the display interface, and the stay duration may be shorter if the user is uninterested in the content of the display interface. Then the terminal may record the stay duration and determine whether to record the interface information of the display interface according to the stay duration.

Step 230: recording the interface information of the display interface if the stay duration exceeds a preset time threshold. In a particular example, the interface information comprises an interface location.

According to the present disclosure, the preset time threshold may be a threshold set according to a practical need. In particular, the preset time threshold may be configured to determine a degree of interest of the user. It can be determined that the user is interested in the content of the display interface if the stay duration of the display interface is more than the preset time threshold, and it can be determined that the user is not interested in the content of the display interface if the stay duration of the display interface is smaller than the preset time threshold.

According to the embodiment, the terminal acquires the stay duration of the interface displayed in response to (or after) the user operation, and records the interface information of the display interface when the stay duration of the display interface exceeds the preset time threshold, so that the terminal is only required to record interface information of a display interface in which the user is interested, storage resources of the terminal can be saved, and interface display efficiency is also improved.

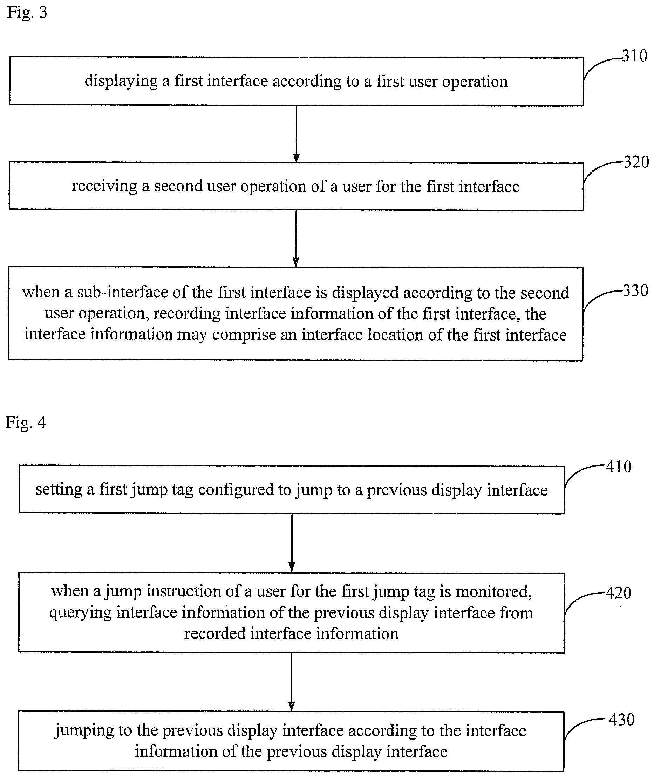

As shown in Fig. 3, Fig. 3 is a flow chart of another interface display method, according to an exemplary embodiment of the present disclosure. The method may be applicable to a terminal. When Step 110 of displaying an interface according to a user operation and recording interface information displayed after each user operation is executed, the method may include the following steps:
Step 310: displaying a first interface according to a first user operation.

According to the present disclosure, the first user operation may be a user swiping operation or a user clicking operation.

Step 320: receiving a second user operation of the user for the first interface.

According to the present disclosure, when the user desires to browse details of a certain piece of information, the user may click a display interface where the information is located, so that the terminal may display a sub-interface of the display interface to present the details of the information to the user.

Step 330: when a sub-interface of the first interface is displayed according to the second user operation, recording interface information of the first interface, wherein the interface information comprising an interface location of the first interface.

According to the present disclosure, when the terminal displays the sub-interface of the first interface, it indicates that the user is interested in the first interface, so that the interface information of the first interface is recorded for subsequent rapid jumping.

According to the embodiment, the terminal displays the first interface according to the first user operation, receives the second user operation of the user for the first interface, and records the interface information of the first interface when the sub-interface of the first interface is displayed according to the second user operation, so that the terminal may record the interface information of the display interface in which the user is interested, and the user experiences are improved.

As shown in Fig. 4, Fig. 4 is a flow chart of another interface display method, according to an exemplary embodiment of the present disclosure. The method may be applicable to a terminal. On the basis of the method shown in Fig. 1, the method may further include the following steps:

Step 410: setting a first jump tag configured to jump to the previous display interface.

According to the present disclosure, the first jump tag may be an existing tag embedded with a jump function, and may also be an additional tag specially configured for interface jumping.

Step 420: when a jump instruction of the user for the first jump tag is detected, querying interface information of the previous display interface from the recorded interface information.

According to the present disclosure, the terminal may store the interface information to be recorded into a data stack. When the jump instruction of the user for the first jump tag is detected, it is only required to extract the interface information of the previous display interface from the data stack and jump to the previous interface according to the interface information.

The interface information recorded in the data stack may include interface information of a plurality of display interfaces.

Step 430: jumping to the previous display interface according to the interface information of the previous display interface.

According to the embodiment, the terminal may set the first jump tag and rapidly jump to the previous display interface according to the jump instruction of the user, so that the interface display efficiency is improved.

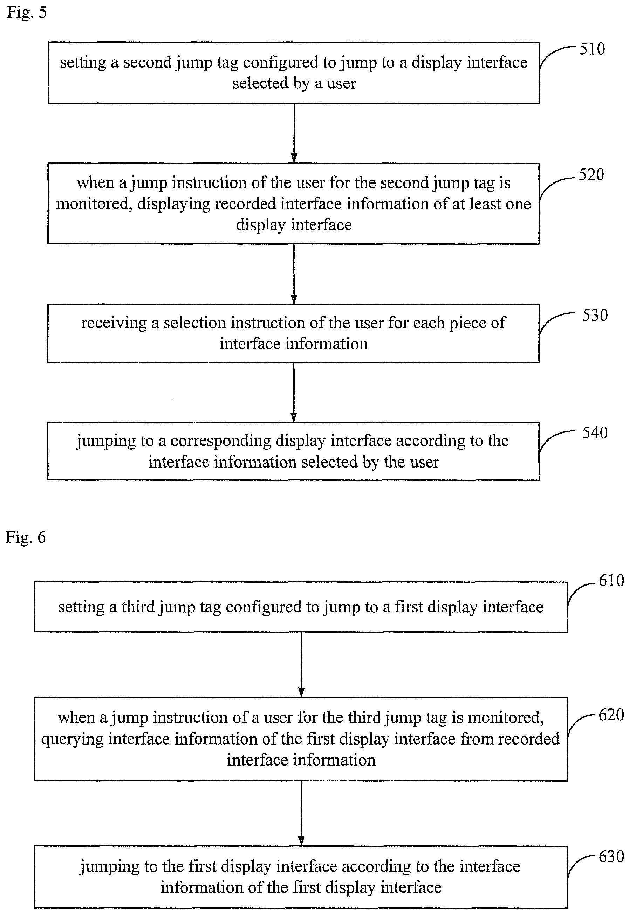

As shown in Fig. 5, Fig. 5 is a flow chart of another interface display method, according to an exemplary embodiment of the present disclosure. The method may be applicable to a terminal. On the basis of the method shown in Fig. 1, the method may further include the following steps:

Step 510: setting a second jump tag configured to jump to a display interface selected by the user.

According to the present disclosure, the second jump tag may be an existing tag embedded with a jump function, and may also be an additional tag specially configured for interface jumping.

Step 520: when a jump instruction of the user for the second jump tag is detected, displaying the recorded interface information of at least one display interface.

According to the present disclosure, the terminal may store the interface information to be recorded into a data stack. When the jump instruction of the user for the second jump tag is detected, it is necessary to present all the interface information stored in the data stack to the user for the user's selection.

Step 530: receiving a selection instruction of the user for each piece of interface information.

According to the present disclosure, the user may select to jump to any display interface according to the interface information of each display interface.

Step 540: jumping to a corresponding display interface according to the interface information selected by the user.

According to the present disclosure, the terminal may set the second jump tag and rapidly jump to the display interface selected by the user according to the jump instruction of the user, so that the user experiences are improved.

As shown in Fig. 6, Fig. 6 is a flow chart of another interface display method, according to an exemplary embodiment of the present disclosure. The method may be applicable to a terminal. On the basis of the method shown in Fig. 1, the method may further include the following steps:
Step 610: setting a third jump tag configured to jump to a first display interface.

According to the present disclosure, the third jump tag may be an existing tag embedded with a jump function, and may also be an additional tag specially configured for interface jumping.

Step 620: when a jump instruction of the user for the third jump tag is detected, querying the interface information of the first (or initial) display interface from the recorded interface information.

In a particular embodiment, the first display interface is an initial display interface among a plurality of successively displayed interfaces. It may be for instance a home page of a website.

According to the present disclosure, the terminal may store the interface information to be recorded into the data stack. When the jump instruction of the user for the third jump tag is detected, it is necessary to extract the interface information of the first display interface from the data stack.

Step 630: jumping to the first display interface according to the interface information of the first display interface.

According to the embodiment, the terminal may set the third jump tag and rapidly jump to the first display interface according to the jump instruction of the user, so that the user experiences are improved.

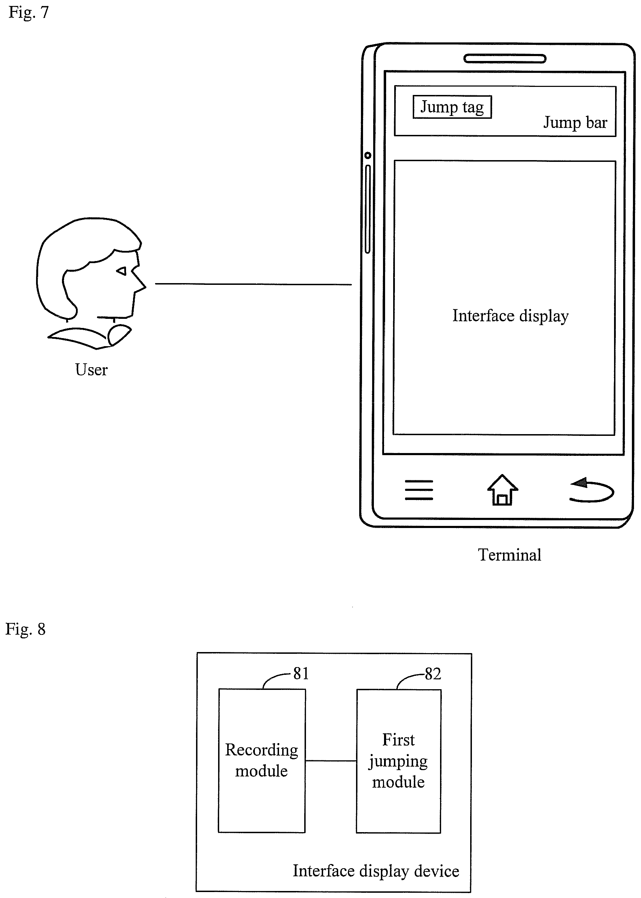

As shown in Fig. 7, Fig. 7 is a diagram of an application scenario of an interface display method, according to an exemplary embodiment of the present disclosure. The application scenario includes a user and a terminal.

The terminal displays an interface according to a user operation, and records interface information displayed after (or in response to) each user operation.

When a jump instruction is detected, the terminal jumps to a previous display interface according to the recorded interface information.

The recorded interface information may be stored in a data stack. The interface information in the data stack complies with a First-In/Last-Out rule.

The terminal may set a first jump tag, the first jump tag being configured to jump to the previous display interface, query interface information of the previous display interface from the recorded interface information when a jump instruction of the user for the first jump tag is detected, and jump to the previous display interface according to the interface information of the previous display interface.

For example, the interface information in the data stack, such as location data of each interface, includes [20px, 50px, 60px]. If the user clicks the first jump tag once, the terminal reads location data 60px from [20px, 50px, 60px] and jumps to a display interface where 60px is located, and then the location data in the data stack includes [20px, 50px]. If the user clicks the first jump tag again, the terminal reads location data 50px from [20px, 50px] and jumps to a display interface where 50px is located, and then the location data in the data stack includes [20px]. Px is a unit representative of a pixel.

The terminal may also set a second jump tag, the second jump tag being configured to jump to a display interface selected by the user, display the recorded interface information of at least one display interface when a jump instruction of the user for the second jump tag is detected, receive a selection instruction of the user for each piece of interface information and jump to the corresponding display interface according to interface information selected by the user.

For example, the interface information in the data stack, such as the location data of each interface, includes [20px, 50px, 60px]. If the user clicks the second jump tag once, or double-clicks the second jump tag once, the terminal reads the three location data [20px, 50px, 60px] from the data stack for the user's selection. If the user selects the location data 50px, the terminal jumps to the display interface where 50px is located.

The terminal may also set a third jump tag, the third jump tag being configured to jump to a first display interface, query interface information of the first display interface from the recorded interface information when a jump instruction of the user for the third jump tag is detected, and jump to the first display interface according to the interface information of the first display interface.

For example, the interface information in the data stack, such as the location data of each interface, includes [20px, 50px, 60px]. If the user clicks the third jump tag once, or double-clicks the third jump tag once, the terminal reads location data 20px from the data stack, and jumps to a display interface where 20px is located.

Corresponding to the abovementioned interface display method, the present disclosure further provides a user determination device.

As shown in Fig. 8, Fig. 8 is a block diagram of an interface display device, according to an exemplary embodiment of the present disclosure. The device is applicable to a terminal, and may be configured to execute the interface display method shown in Fig. 1. The device includes: a recording module 81 and a first jumping module 82.

The recording module 81 is configured to display an interface according to a user operation, and record interface information displayed in response to (or after) each user operation.

The first jumping module 82 is configured to jump to a previous display interface according to the interface information when a jump instruction is detected.

According to the embodiment, the device may display the interface according to the user operation, record the interface information displayed after each user operation and jump to the previous display interface according to the recorded interface information displayed in response to each user operation when the jump instruction is detected, so that the terminal may rapidly jump to the previous display interface according to a requirement of the user, which may lead to simple and convenient operations, as well as improved user experience.

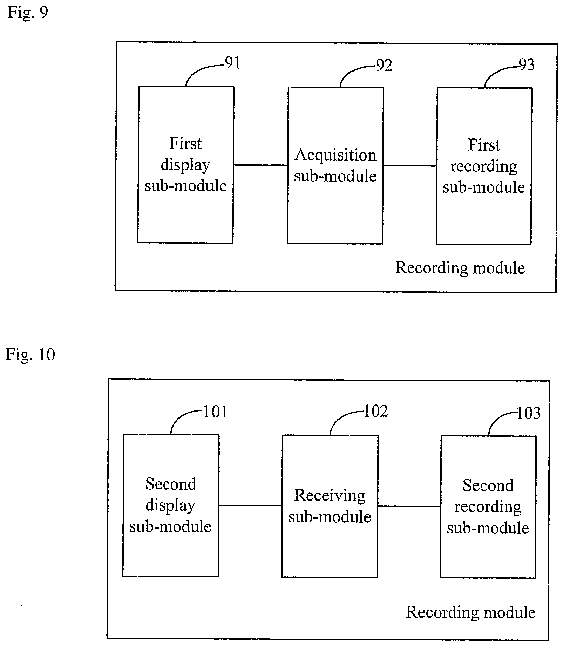

As shown in Fig. 9, Fig. 9 is a block diagram of another interface display device, according to an exemplary embodiment of the present disclosure. The device is applicable to a terminal. On the basis of the device shown in Fig. 8, the recording module 81 includes: a first display sub-module 91, an acquisition sub-module 92 and a first recording sub-module 93.

The first display sub-module 91 is configured to display the interface according to the user operation, wherein the user operation comprises a user swiping operation or a user clicking operation.

The acquisition sub-module 92 is configured to acquire a stay duration of the interface displayed after the user operation.

The first recording sub-module 93 is configured to record the interface information of the display interface when the stay duration exceeds a preset time threshold. In a particular example, the interface information comprises an interface location.

According to the embodiment, the device may acquire the stay duration of the interface displayed after the user operation, and record the interface information of the display interface if the stay duration of the display interface exceeds the preset time threshold, so that the terminal is only required to record interface information of a display interface in which the user is interested, storage resources of the terminal can be saved, and interface display efficiency is further improved.

As shown in Fig. 10, Fig. 10 is a block diagram of another interface display device, according to an exemplary embodiment of the present disclosure. The device is applicable to a terminal. On the basis of the device shown in Fig. 8, the recording module 81 includes: a second display sub-module 101, a receiving sub-module 102 and a second recording sub-module 103.

The second display sub-module 101 is configured to display a first interface according to first user operation.

The receiving sub-module 102 is configured to receive second user operation of a user for the first interface.

The second recording sub-module 103 is configured to, when a sub-interface of the first interface is displayed according to the second user operation, record interface information of the first interface, wherein the interface information comprises an interface location of the first interface.

According to the embodiment, the device may store the interface information to be recorded into a data stack, and is only required to extract the interface information of the previous display interface from the data stack and jump to the previous interface according to the interface information if the jump instruction of the user for the first jump tag is detected.

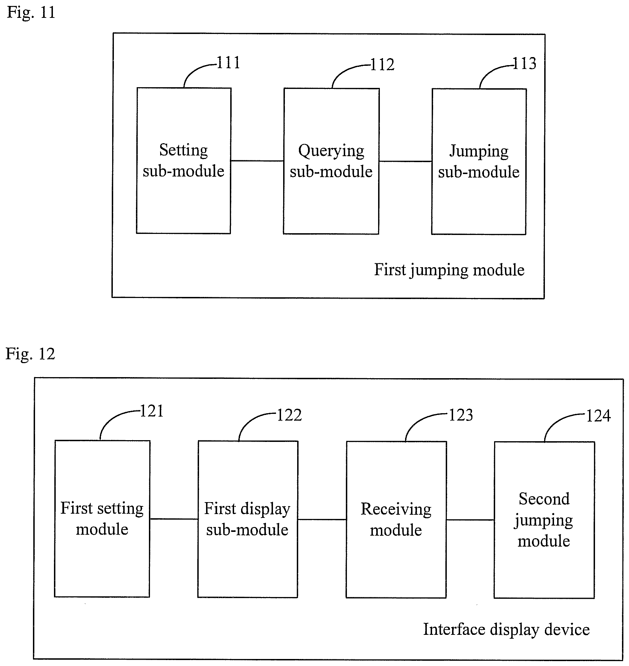

As shown in Fig. 11, Fig. 11 is a block diagram of another interface display device, according to an exemplary embodiment of the present disclosure. The device is applicable to a terminal. On the basis of the device shown in Fig. 8, the first jumping module 82 includes: a setting sub-module 111, a querying sub-module 112 and a jumping sub-module 113.

The setting sub-module 111 is configured to set a first jump tag, the first jump tag being configured to jump to the previous display interface.

The querying sub-module 112 is configured to, when a jump instruction of the user for the first jump tag is detected, query interface information of the previous display interface from the recorded interface information.

The jumping sub-module 113 is configured to jump to the previous display interface according to the interface information of the previous display interface.

According to the embodiment, the device may set the first jump tag and rapidly jump to the previous display interface according to the jump instruction of the user, so that the interface display efficiency is improved.

As shown in Fig. 12, Fig. 12 is a block diagram of another interface display device, according to an exemplary embodiment of the present disclosure. The device is applicable to a terminal. On the basis of the device shown in Fig. 8, the device further includes: a first setting module 121, a first display sub-module 122, a receiving module 123 and a second jumping module 124.

The first setting module 121 is configured to set a second jump tag, the second jump tag being configured to jump to a display interface selected by the user.

The first display sub-module 122 is configured to, when a jump instruction of the user for the second jump tag is detected, display the recorded interface information of at least one display interface.

The receiving module 123 is configured to receive a selection instruction of the user for each piece of interface information.

The second jumping module 124 is configured to jump to a corresponding display interface according to the interface information selected by the user.

According to the embodiment, the device may set the second jump tag and rapidly jump to the display interface selected by the user according to the jump instruction of the user, so that the user experiences are improved.

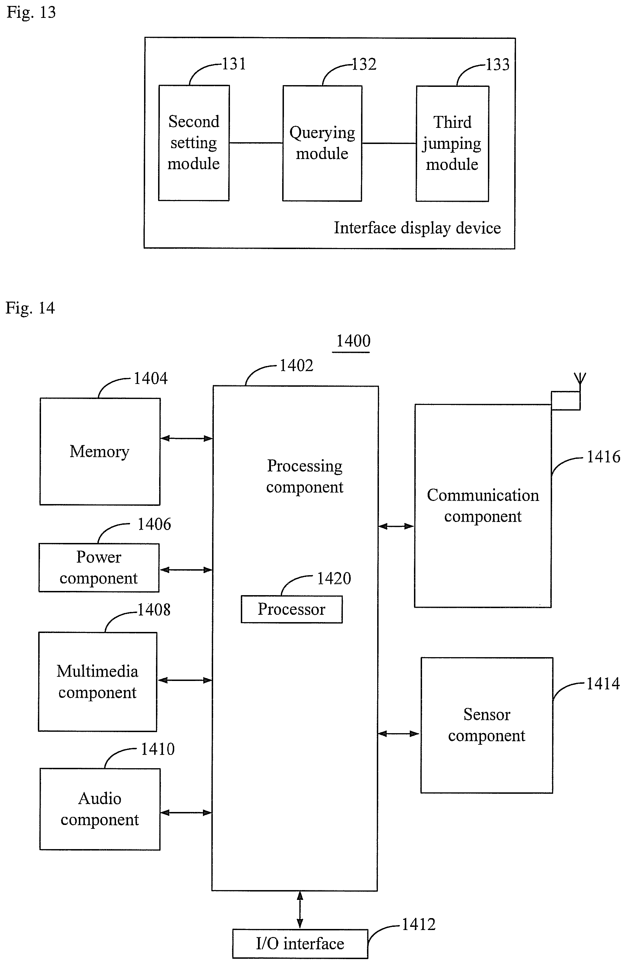

As shown in Fig. 13, Fig. 13 is a block diagram of another interface display device, according to an exemplary embodiment of the present disclosure. The device is applicable to terminal. On the basis of the device shown in Fig. 8, the device further includes: a second setting module 131, a querying module 132 and a third jumping module 133.

The second setting module 131 is configured to set a third jump tag, the third jump tag being configured to jump to the first display interface.

The querying module 132 is configured to, when a jump instruction of the user for the third jump tag is detected, query the interface information of the first display interface from the recorded interface information.

The third jumping module 133 is configured to jump to the first display interface according to the interface information of the first display interface.

According to the embodiment, the device may set the third jump tag and rapidly jump to the first display interface according to the jump instruction of the user, so that the user experiences are improved.

Corresponding to Fig. 7, the present disclosure further provides another interface display device, which is applicable to a terminal, including:
a processor; and
a memory configured to store executable instructions of the processor,
wherein the processor may be configured to:
display an interface according to a user operation and record interface information displayed after each user operation; and
jump to a previous display interface according to the interface information when a jump instruction is detected.

Functions of each module in the apparatus and implementation processes of the functions refer to the implementation processes of the corresponding steps in the methods, and will not be repeated here.

For apparatus embodiments, since they substantially correspond to the method embodiments, description about related parts refer to description about the corresponding parts of the method embodiments. The apparatus embodiments described above are only schematic, wherein the modules described as separate parts may be or may not be physically separated, and the parts displayed as modules may be or may not be physical modules, that is, the parts may be located at the same place, or may also be distributed on multiple network modules. A part or all of the modules may be selected to fulfill the aim of the solutions of the present disclosure according to a practical requirement.

As shown in Fig. 14, Fig. 14 is a structure diagram of an interface display device 1400 (a terminal side), according to an exemplary embodiment of the present disclosure. For example, the device 1400 may be a mobile phone with a routing function, a computer, a digital broadcast terminal, a messaging device, a gaming console, a tablet, a medical device, exercise equipment, a personal digital assistant and the like.

Referring to Fig. 14, the device 1400 may include one or more of the following components: a processing component 1402, a memory 1404, a power component 1406, a multimedia component 1408, an audio component 1410, an Input/Output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the abovementioned methods. Moreover, the processing component 1402 may include one or more modules which facilitate interaction between the processing component 1402 and the other components. For instance, the processing component 1402 may include a multimedia module to facilitate interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1406 provides power for various components of the device 1400. The power component 1406 may include a power management system, one or more power supplies, and other components associated with the generation, management and distribution of power for the device 1400.

The multimedia component 1408 includes a screen providing an output interface between the device 1400 and the user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1408 includes a front camera and/or a rear camera. The front camera and/or the rear camera may receive external multimedia data when the device 1400 is in an operation mode, such as a photographing mode or a video mode. Each of the front camera and the rear camera may be a fixed optical lens system or have focusing and optical zooming capabilities.

The audio component 1410 is configured to output and/or input an audio signal. For example, the audio component 1410 includes a microphone (MIC), and the MIC is configured to receive an external audio signal when the device 1400 is in the operation mode, such as a call mode, a recording mode and a voice recognition mode. The received audio signal may be further stored in the memory 1404 or sent through the communication component 1416. In some embodiments, the audio component 1410 further includes a speaker configured to output the audio signal.

The I/O interface 1412 provides an interface between the processing component 1402 and a peripheral interface module, and the peripheral interface module may be a keyboard, a click wheel, a button and the like. The button may include, but not limited to: a home button, a volume button, a starting button and a locking button.

The sensor component 1414 includes one or more sensors configured to provide status assessment in various aspects for the device 1400. For instance, the sensor component 1414 may detect an on/off status of the device 1400 and relative positioning of components, such as a display and small keyboard of the device 1400, and the sensor component 1414 may further detect a change in a position of the device 1400 or a component of the device 1400, presence or absence of contact between the user and the device 1400, orientation or acceleration/deceleration of the device 1400 and a change in temperature of the device 1400. The sensor component 1414 may include a proximity sensor configured to detect presence of an object nearby without any physical contact. The sensor component 1414 may also include a light sensor, such as a Complementary Metal Oxide Semiconductor (CMOS) or Charge Coupled Device (CCD) image sensor, configured for use in an imaging application. In some embodiments, the sensor component 1414 may also include an acceleration sensor, a gyroscope sensor, a magnetic sensor, a pressure sensor, a microwave sensor or a temperature sensor.

The communication component 1416 is configured to facilitate wired or wireless communication between the device 1400 and another device. The device 1400 may access a communication-standard-based wireless network, such as a Wireless Fidelity (WiFi) network, a 2nd-Generation (2G) or 3rd-Generation (3G) network or a combination thereof. In an exemplary embodiment, the communication component 1016 receives a broadcast signal or broadcast associated information from an external broadcast management system through a broadcast channel. In an exemplary embodiment, the communication component 1416 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and other technologie.

In the exemplary embodiment, the device 1400 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In the exemplary embodiment, there is also provided a non-transitory computer-readable storage medium including an instruction, such as the memory 1404 including an instruction, and the instruction may be executed by the processor 1420 of the device 1400 to implement the above-described methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method of displaying an interface on a terminal, comprising the steps of:
displaying an interface in response to a user operation,
**characterized in that** the method of displaying an interface further comprises the steps of:
recording interface information for each displayed interface, each display interface being displayed in response to a user operation (110);
wherein the interface information comprises a location of the displayed interface among the displayed interfaces (230),
and
jumping to a previously displayed display interface according to the interface information if a jump instruction is detected (120),
wherein the jump instruction is an instruction for instructing the interface display device to jump from a current **displayed** interface to a previously displayed display interface,
wherein said user operation comprises a user swiping operation or a user clicking operation (210); and
wherein the step of recording interface information for the displayed interface in response to each user operation comprises:
acquiring a duration of the display of the interface displayed in response to the user operation (220); and
recording the interface information of the **displayed** interface if the duration of the display of the interface exceeds a preset time threshold.

2. The method according to claim 1, wherein the step of displaying an interface according to a user operation and recording interface information displayed in response to each user operation comprises:
displaying a first interface according to a first user operation (310);
receiving a second user operation from the user for the first interface (320); and
if a sub-interface of the first interface is displayed according to the second user operation, recording interface information of the first interface, wherein the interface information comprises a location of the first interface (330).

3. A terminal, **characterized in that** the terminal comprises:
a recording module (81) configured to display user interfaces, each user interface among said user interfaces being displayed according to a user operation, and record interface information displayed in response to each user operation;
wherein the interface information comprises a location of the displayed interface among said displayed user interfaces; and
a first jumping module (82) configured to, if a jump instruction is detected, jump to a previously displayed interface according to said interface information, wherein the jump instruction is an instruction for instructing the interface display device to jump from a current displayed interface to a previously displayed interface,
wherein the user operation comprises a user swiping operation or a user clicking operation; and
wherein **the recording module (81)** comprises:
an acquisition sub-module (92) configured to acquire a duration **of the display** of the interface displayed in response to the user operation; and
a first recording sub-module (93) configured to record said interface information of the displayed interface if the duration **of the display of the interface** exceeds a preset time threshold.

4. The terminal according to claim 3, wherein the recording module comprises:
a second display sub-module (101) configured to display a first interface according to first user operation;
a receiving sub-module (102) configured to receive second user operation **from the** user for the first interface; and
a second recording sub-module (103) configured to, if a sub-interface of the first interface is displayed according to the second user operation, record interface information of the first interface, wherein the interface information comprises a location of the first interface.

5. A computer program including instructions for executing the steps **of the method** according to method claim 1 or 2 when said program is executed by a computer.

6. A recording medium readable by a computer and having recorded thereon a computer program including instructions for executing the steps **of** the method according to claim 1 or 2.

## Patentansprüche

1. Verfahren zum Anzeigen einer Schnittstelle auf einem Endgerät, umfassend die Schritte des:
Anzeigens einer Schnittstelle als Reaktion auf eine Benutzeraktion,
**dadurch gekennzeichnet, dass** das Verfahren zum Anzeigen einer Schnittstelle ferner die Schritte umfasst des:
Aufzeichnens von Schnittstelleninformationen für jede angezeigte Schnittstelle, wobei jede Anzeigeschnittstelle als Reaktion auf eine Benutzeraktion angezeigt wird (110),
wobei die Schnittstelleninformationen eine Position der angezeigten Schnittstelle unter den angezeigten Schnittstellen umfassen (230),
und
Springens zu einer zuvor angezeigten Anzeigeschnittstelle gemäß den Schnittstelleninformationen, wenn eine Sprunganweisung erkannt wird (120),
wobei die Sprunganweisung eine Anweisung zum Anweisen der Schnittstellenanzeigevorrichtung dazu ist, von einer aktuell angezeigten Schnittstelle zu einer zuvor angezeigten Anzeigeschnittstelle zu springen,
wobei die Benutzeraktion eine Wischaktion durch den Benutzer oder eine Klickaktion durch den Benutzer umfasst (210) und
wobei der Schritt des Aufzeichnens von Schnittstelleninformationen für die angezeigte Schnittstelle als Reaktion auf jede Benutzeraktion umfasst:
Abrufen einer Dauer der Anzeige der als Reaktion auf die Benutzeraktion angezeigten Schnittstelle (220), und
Aufzeichnen der Schnittstelleninformationen der angezeigten Schnittstelle, wenn die Dauer der Anzeige der Schnittstelle einen voreingestellten Zeitschwellenwert überschreitet.

2. Verfahren nach Anspruch 1, wobei der Schritt des Anzeigens einer Schnittstelle gemäß einer Benutzeraktion und des Aufzeichnens von Schnittstelleninformationen, die als Reaktion auf jede Benutzeraktion angezeigt werden, umfasst:
Anzeigen einer ersten Schnittstelle gemäß einer ersten Benutzeraktion (310),
Empfangen einer zweiten Benutzeraktion von dem Benutzer für die erste Schnittstelle (320), und,
wenn eine Unterschnittstelle der ersten Schnittstelle gemäß der zweiten Benutzeraktion angezeigt wird, Aufzeichnen von Schnittstelleninformationen der ersten Schnittstelle, wobei die Schnittstelleninformationen eine Position der ersten Schnittstelle umfassen (330).

3. Endgerät, **dadurch gekennzeichnet, dass** das Endgerät umfasst:
ein Aufzeichnungsmodul (81), das dazu ausgestaltet ist, Benutzerschnittstellen anzuzeigen, wobei jede Benutzerschnittstelle unter den Benutzerschnittstellen gemäß einer Benutzeraktion angezeigt wird, und Schnittstelleninformationen aufzuzeichnen, die als Reaktion auf jeder Benutzeraktion angezeigt werden,
wobei die Schnittstelleninformationen eine Position der angezeigten Schnittstelle unter den angezeigten Benutzerschnittstellen umfassen, und
ein erstes Sprungmodul (82), das dazu ausgestaltet ist, wenn eine Sprunganweisung erkannt wird, zu einer zuvor angezeigten Schnittstelle gemäß den Schnittstelleninformationen zu springen, wobei die Sprunganweisung eine Anweisung zum Anweisen der Schnittstellenanzeigevorrichtung dazu ist, von einer aktuell angezeigten Schnittstelle zu einer zuvor angezeigten Schnittstelle zu springen,
wobei die Benutzeraktion eine Wischaktion durch den Benutzer oder eine Klickaktion durch den Benutzer umfasst und
wobei das Aufzeichnungsmodul (81) umfasst:
ein Abrufuntermodul (92), das dazu ausgestaltet ist, eine Dauer der Anzeige der als Reaktion auf die Benutzeraktion angezeigten Schnittstelle abzurufen, und
ein erstes Aufzeichnungsuntermodul (93), das dazu ausgestaltet ist, die Schnittstelleninformationen der angezeigten Schnittstelle aufzuzeichnen, wenn die Dauer der Anzeige der Schnittstelle einen voreingestellten Zeitschwellenwert überschreitet.

4. Endgerät nach Anspruch 3, wobei das Aufzeichnungsmodul umfasst:
ein zweites Anzeigeuntermodul (101), das dazu ausgestaltet ist, eine erste Schnittstelle gemäß einer ersten Benutzeraktion anzuzeigen,
ein Empfangsuntermodul (102), das dazu ausgestaltet ist, eine zweite Benutzeraktion von dem Benutzer für die erste Schnittstelle zu empfangen, und
ein zweites Aufzeichnungsuntermodul (103), das dazu ausgestaltet ist, wenn eine Unterschnittstelle der ersten Schnittstelle gemäß der zweiten Benutzeraktion angezeigt wird, Schnittstelleninformationen der ersten Schnittstelle aufzuzeichnen, wobei die Schnittstelleninformationen eine Position der ersten Schnittstelle umfassen.

5. Computerprogramm, das Anweisungen zum Ausführen der Schritte des Verfahrens nach Verfahrensanspruch 1 oder 2, wenn das Programm von einem Computer ausgeführt wird, beinhaltet.

6. Aufzeichnungsmedium, das von einem Computer lesbar ist und ein darauf aufgezeichnetes Computerprogramm aufweist, das Anweisungen zum Ausführen der Schritte des Verfahrens nach Anspruch 1 oder 2 beinhaltet.

## Revendications

1. Procédé d'affichage d'une interface sur un terminal, comprenant les étapes ci-dessous consistant à :
afficher une interface en réponse à une opération d'utilisateur ;
**caractérisé en ce que** le procédé d'affichage d'une interface comprend en outre les étapes ci-dessous consistant à :
enregistrer des informations d'interface pour chaque interface affichée, chaque interface d'affichage étant affichée en réponse à une opération d'utilisateur (110) ;
dans lequel les informations d'interface comprennent un emplacement de l'interface affichée parmi les interfaces affichées (230) ; et
sauter vers une interface d'affichage préalablement affichée selon les informations d'interface si une instruction de saut est détectée (120) ;
dans lequel l'instruction de saut est une instruction visant à donner instruction au dispositif d'affichage d'interface de sauter d'une interface affichée en cours à une interface d'affichage affichée précédemment ;
dans lequel ladite opération d'utilisateur comprend une opération de glissement d'utilisateur ou une opération de clic d'utilisateur (210) ; et
dans lequel l'étape d'enregistrement d'informations d'interface pour l'interface affichée en réponse à chaque opération d'utilisateur comprend les étapes ci-dessous consistant à :
acquérir une durée de l'affichage de l'interface affichée en réponse à l'opération d'utilisateur (220) ; et
enregistrer les informations d'interface de l'interface affichée si la durée de l'affichage de l'interface dépasse un seuil de temps prédéfini.

2. Procédé selon la revendication 1, dans lequel l'étape d'affichage d'une interface selon une opération d'utilisateur et d'enregistrement d'informations d'interface affichées en réponse à chaque opération d'utilisateur comprend les étapes ci-dessous consistant à :
afficher une première interface selon une première opération d'utilisateur (310) ;
recevoir une seconde opération d'utilisateur en provenance de l'utilisateur pour la première interface (320) ; et
si une sous-interface de la première interface est affichée selon la seconde opération d'utilisateur, enregistrer des informations d'interface de la première interface, dans lequel les informations d'interface comprennent un emplacement de la première interface (330).

3. Terminal, **caractérisé en ce que** le terminal comprend :
un module d'enregistrement (81) configuré de manière à afficher des interfaces utilisateur, dans lequel chaque interface utilisateur parmi lesdites interfaces utilisateur est affichée selon une opération d'utilisateur, et à enregistrer des informations d'interface affichées en réponse à chaque opération d'utilisateur ;
dans lequel les informations d'interface comprennent un emplacement de l'interface affichée parmi lesdites interfaces utilisateur affichées ; et
un premier module de saut (82) configuré de manière à, si une instruction de saut est détectée, sauter vers une interface affichée précédemment selon lesdites informations d'interface, dans lequel l'instruction de saut est une instruction visant à donner instruction au dispositif d'affichage d'interface de sauter d'une interface affichée en cours à une interface affichée précédemment ;
dans lequel l'opération d'utilisateur comprend une opération de glissement d'utilisateur ou une opération de clic d'utilisateur ; et
dans lequel le module d'enregistrement (81) comprend :
un sous-module d'acquisition (92) configuré de manière à acquérir une durée de l'affichage de l'interface affichée en réponse à l'opération d'utilisateur ; et
un premier sous-module d'enregistrement (93) configuré de manière à enregistrer lesdites informations d'interface de l'interface affichée si la durée de l'affichage de l'interface dépasse un seuil de temps prédéfini.

4. Terminal selon la revendication 3, dans lequel le module d'enregistrement comprend :
un second sous-module d'affichage (101) configuré de manière à afficher une première interface selon la première opération d'utilisateur ;
un sous-module de réception (102) configuré de manière à recevoir une seconde opération d'utilisateur en provenance de l'utilisateur pour la première interface ; et
un second sous-module d'enregistrement (103) configuré de manière à, si une sous-interface de la première interface est affichée selon la seconde opération d'utilisateur, enregistrer des informations d'interface de la première interface, dans lequel les informations d'interface comprennent un emplacement de la première interface.

5. Programme informatique incluant des instructions pour exécuter les étapes du procédé selon la revendication de procédé 1 ou 2, lorsque ledit programme est exécuté par un ordinateur.

6. Support d'enregistrement lisible par un ordinateur, et sur lequel est enregistré un programme informatique incluant des instructions pour exécuter les étapes du procédé selon la revendication 1 ou 2.
